# EUROPÄISCHE PATENTSCHRIFT

(11) **EP 2 674 128 B1**
(45) Veröffentlichungstag und Bekanntmachung des Hinweises auf die Patenterteilung: **08.08.2018**
(21) Anmeldenummer: 13170635.0
(22) Anmeldetag: 05.06.2013
(51) Int. Cl.: A61C 8/00, A61C 13/34, A61C 9/00, A61C 13/00

(54) **Verfahren zur Herstellung eines Laboranalogs für Dentalimplantate**
Method for producing a laboratory analog for dental implants
Procédé de fabrication d'un analogue de laboratoire pour implants dentaires

(30) Priorität: 06.06.2012 DE 102012011238
(43) Veröffentlichungstag der Anmeldung: 18.12.2013
(60) Teilanmeldung: 18151067.8
(73) Patentinhaber: Kulzer GmbH, 63450 Hanau (DE)
(72) Erfinder: Woldegergis, Yohannes, 63457 Hanau (DE); Hormann, Stefan, 63636 Brachttal-Hellstein (DE); Redemann, Helmut, 60325 Frankfurt am Main (DE); Böhm, Dr. Uwe, 63456 Hanau (DE)
(74) Vertreter: Bendele, Tanja

(56) Entgegenhaltungen:
- EP-A2- 2 389 891
- WO-A1-2010/115443

## Beschreibung

Die Erfindung betrifft Verfahren zur Herstellung eines Laboranalogs mit Hilfe von Daten eines dreidimensionalen Scans des Mundraums des Patienten, wobei die Daten zuvor aufgenommen wurden. In diesem Zusammenhang wird das Dokument EP2 389 891 A2 genannt. Dentalimplantate werden in der Zahnmedizin eingesetzt, um extrahierte oder ausgefallene Zähne zu ersetzen. Dazu werden die Dentalimplantate in den Kieferknochen eingesetzt. Aus der DE 10 2007 029 105 A1 sind Dentalimplantate bekannt, die In den Kieferknochen eingesetzt werden. Das Dentalimplantat umfasst eine zylindrische Bohrung mit einem Innengewinde. Zudem ist das Dentalimplantat mit Indizierungen strukturiert, die verhindern sollen, dass der Aufbau in beliebigen Winkeln in das Dentalimplantat eingesetzt werden kann.
Auch Laboranaloge sind aus dem Stand der Technik bekannt. So offenbart die WO 2010/115443 A1 ein Implantatanalog, das eine sich in axialer Richtung erstreckende Hülse mit einer axialen Innenbohrung mit Innengewinde zum Einschrauben einer Befestigungsschraube aufweist. Aus der EP 2 369 891 A2 ist ein Analogimplantat bekannt, das eine drehsymmetrische Geometrie aufweist, um eine Höhen-, Axial- und Winkelausrichtung in einer Bohrung oder Blindbohrung eines Dentalmodells zu gestatten.

Laboranaloge werden dazu benötigt, einem Zahntechniker die Möglichkeit zu geben, einen Zahnersatz auf einem Implantataufbau im Labor zu modellieren, der dann später beim Patienten eingesetzt wird. Laboranaloge haben dazu eine materialspezifische Geometrie und Form. Meist wird dazu ein Abdruck mit einer Abformmasse genommen, mit dem dann anschließend ein Gipsmodell des Kiefers des Patienten gefertigt wird, indem der Abdruck mit Gips ausgegossen wird. Das Laboranalog wird dabei in das Modell des Kiefers in der entsprechenden Position integriert. Die Geometrie und Form des Laboranalogs muss dazu auf den Gips angepasst werden. Dieses Modell des Kiefers wird mit dem integrierten Laboranalog vom Zahntechniker dazu verwendet, den Implantataufbau und den Zahnersatz passend zur Situation im Mundraum des Patienten auszuformen.

Seit einiger Zeit wird statt diesem Verfahren auch ein anderes Verfahren eingesetzt, um ein Modell für den Kiefer und die Einbausituation bereitzustellen. Mit z.B. einem IntraOralscanner wird die dreidimensionale Situation im Mundraum des Patienten zunächst aufgenommen und in einem elektronischen Speicher eines Rechners digital hinterlegt. Dazu werden meist CAD-Programme verwendet. Anschließend wird ein Modell des Kiefers mit einem lichthärtenden Kunststoff in bekannter Weise mit Hilfe eines Lasers erzeugt. In diese Kunststoffmodelle des Kiefers werden dann die Laboranaloge eingesetzt. Das Kunststoffmodell des Kiefers mit dem Laboranalog, kann dann wieder zum Aufbau des Zahnersatzes durch den Zahntechniker verwendet werden.

Nachteilig ist hieran, dass die Einbausituation am Modell des Kiefers für den Zahntechniker nicht exakt definiert ist. Insbesondere bei Suprastrukturen, die an mehreren Dentalimplantaten im Kiefer des Patienten fixiert werden müssen, kommt es, wenn die Lage und die Ausrichtung der Laboranaloge im Modell nicht exakt genug mit der Situation im Mundraum übereinstimmt, dazu, dass ungewollte Spannungen im Kieferknochen auftreten. Dies kann zu Schmerzen beim Patienten führen und auch zu einer Belastung des Kieferknochens, sodass schlimmstenfalls der Verlust der Implantate droht. Deswegen ist es schon bei der Herstellung des Modells und der Lage und Ausrichtung der Laboranaloge untereinander von zentraler Bedeutung, dies alles mit einer möglichst hohen Genauigkeit durchzuführen.

Wenn es beim Einsetzen des Zahnersatzes durch den Zahnarzt dazu kommt, dass der Zahnersatz nicht genau zu der Situation im Mundraum des Patienten passt, muss der Zahnarzt den Zahnersatz noch vor Ort anpassen oder schlimmstenfalls muss der Zahnersatz komplett neu gefertigt werden. Das Laboranalog lässt sich zudem nicht ohne weiteres in der richtigen Position fixieren, so dass es auch während der Herstellung des Zahnersatzes zu Positionsveränderungen und damit zu einer fehlerhaften Passung des Zahnersatzes kommen kann. Das Laboranalog ist nämlich drehbar und in seiner Längsrichtung verschiebbar in dem Modell angeordnet.

Die Aufgabe der Erfindung besteht also darin, die Nachteile des Stands der Technik zu überwinden. Insbesondere soll eine Möglichkeit gefunden werden, ein Modell des Kiefers oder ein Laboranalog, insbesondere eines mit Rapid Prototyping gefertigten Kunststoffmodells des Kiefers, mit eingesetzten Laboranalogen zur Herstellung eines Zahnersatzes möglichst exakt herzustellen, so dass ein geringerer Ausschuss bei der Herstellung eines Zahnersatzes entsteht und dass der Zahnarzt weniger, beziehungsweise keine zusätzlichen Anpassungen mehr beim Einsetzen des Zahnersatzes vornehmen muss. Zudem sollen die modernen Verfahren bei der Herstellung des Modells des Kiefers anwendbar sein.

Die Aufgabe der Erfindung wird gelöst durch ein Verfahren zur Herstellung eines Laboranalogs für Dentalimplantate umfassend die Schritte:
Bereitstellen wenigstens einer Hülse umfassend eine zylindrische Vertiefung mit einem Innengewinde;
Bereitstellen eines dreidimensionalen Modells zumindest eines Teilbereichs eines Kiefers eines Patienten, der zumindest ein Dentalimplantat hat;
Einsetzen zumindest einer Hülse in zumindest eine zur Hülse passende Ausnehmung des Modells, wobei jede Ausnehmung in einem Bereich des Modells angeordnet ist, in dem im Kiefer des Patienten ein Dentalimplantat angeordnet ist; und
vollautomatisches Abtragen zumindest einer eingesetzten Hülse, wobei das Abtragen durch die Daten eines dreidimensionalen Scans des Mundraums des Patienten gesteuert wird, wobei die Daten zuvor aufgenommen wurden, und die Hülse mit Hilfe der Daten soweit abgetragen wird, dass das crestale Ende des aus der Hülse hergestellten Laboranalogs mit dem crestalen Ende des Dentalimplantats im Kiefer des Patienten übereinstimmt.

Dabei kann vorgesehen sein, dass die Hülse von der crestalen Richtung her abgetragen, insbesondere geschnitten, abgeschliffen und/oder abgefräst wird.

Die Aufgabe der Erfindung bezüglich des Verfahrens wird auch gelöst durch ein Verfahren zur Herstellung eines dreidimensionalen Modells zumindest eines Teilbereichs eines Kiefers zum Herstellen eines Zahnersatzes, umfassend die Schritte:
Bereitstellen von Daten eines dreidimensionalen Scans eines Mundraums eines Patienten, der zumindest ein Dentalimplantat hat, wobei die Daten zuvor aufgenommen wurden;
Erstellen eines dreidimensionalen Modells zumindest des Teilbereichs des Kiefers; und
vollautomatisches Ausformen zumindest einer Ausnehmung zur Aufnahme eines Laboranalogs in den Kiefersattel des Modells, wobei beim Ausformen die Daten des dreidimensionalen Scans verwendet werden und die Tiefe, die Lage und die Ausrichtung der zumindest einen Ausnehmung derart ausgeformt wird, dass das crestale Ende des in die Ausnehmung eingesetzten Laboranalogs mit dem crestalen Ende eines Dentalimplantats im Kiefer des Patienten übereinstimmt.

Dabei kann vorgesehen sein, dass das Laboranalog, insbesondere ein Standardlaboranalog in die Ausnehmung eingesetzt wird oder eine Hülse in die Ausnehmung eingesetzt wird, wobei ein Laboranalog durch Abtragen aus der Hülse hergestellt wird, wobei vorzugsweise die Daten des dreidimensionalen Scans verwendet werden, um die Hülse vollautomatisch abzutragen.

Durch die offenbarten Verfahren kann das erfindungsgemäße Verfahren zur Herstellung des Laboranalogs mit einem Verfahren zur Herstellung der Ausnehmung in dem Modell kombiniert werden.

Ferner offenbart wird ein Verfahren zur Herstellung eines dreidimensionalen Modells zumindest eines Teilbereichs eines Kiefers zum Herstellen eines Zahnersatzes, umfassend die Schritte:
Bereitstellen von Daten eines dreidimensionalen Scans eines Mundraums eines Patienten, der zumindest ein Dentalimplantat hat, wobei die Daten zuvor aufgenommen wurden.

Erstellen eines dreidimensionalen Modells zumindest des Teilbereichs des Kiefers mit zumindest einer Ausnehmung zur Aufnahme eines Laboranalogs mit einer Öffnung, wobei jede Ausnehmung in einem Bereich des Modells angeordnet ist, in dem im Kiefer des Patienten ein Dentalimplantat angeordnet ist; und
vollautomatisches Ausformen zumindest einer vestibulären, lingualen oder palatinalen Durchführung durch das Modell bis in die zumindest eine Ausnehmung, wobei beim Ausformen die Daten des dreidimensionalen Scans verwendet werden und die Anordnung der Durchführung derart platziert wird, dass das crestale Ende eines Laboranalogs mit dem crestalen Ende des Dentalimplantats im Kiefer des Patienten übereinstimmt, wenn das Laboranalog mit einem Stift fixiert wird, der durch die Durchführung im Modell in eine Öffnung im Laboranalog gesteckt wird.

Dabei kann vorgesehen sein, dass die Durchführung passend zum Stift ausgeformt wird und die Öffnung zum Stift passt, bevorzugt eine hinter der Öffnung angeordnete Vertiefung im Laboranalog zum Stift passt.

Bei erfindungsgemäßen Verfahren zur Herstellung von Modellen kann ferner vorgesehen sein, dass das vollautomatische Ausformen durch Bohren, Abdrehen, Ausschleifen, Ausschneiden und/oder Ausfräsen erfolgt.

Diese Herstellungsmethoden können besonders präzise und effizient mit vollautomatischen computergestützten Methoden umgesetzt werden.

Erfindungsgemäß kann auch vorgesehen sein, dass das vollautomatische Ausformen und/oder Abtragen, das insbesondere computergestützt durchgeführt wird, mit einer Genauigkeit von mindestens ± 10 µm, bevorzugt mit einer Genauigkeit von mindestens ± 5 µm durchgeführt wird.

Diese Genauigkeit ist ausreichend, um die Abutments, die Abutmentaufbauten und andere Aufbauten spannungsfrei an den Dentalimplantaten zu befestigen. Zudem kann mit diesen Genauigkeiten der Scan des Mundraums ohne größeren Aufwand mit bekannten Verfahren durchgeführt werden.

Ferner kann vorgesehen sein, dass die Daten des dreidimensionalen Scans des Mundraums des Patienten dazu verwendet werden, das dreidimensionale Modell des Kiefers oder Kieferbereichs herzustellen, insbesondere vollautomatisch herzustellen, wobei bevorzugt das Modell durch Rapid Prototyping (schnellen Modellbau) hergestellt wird, besonders bevorzugt mit einer Genauigkeit von zumindest ± 100 µm, ganz besonders bevorzugt mit einer Genauigkeit von zumindest ± 60 µm.

Die einfache und kostengünstige Herstellung des Modells gepaart mit der Verfeinerung durch das vollautomatische Abtragen der Hülse oder Ausformen der Ausnehmung oder der Durchführung ergibt ein schnelles und möglichst kostengünstiges Verfahren, das aber gleichzeitig eine hohe Genauigkeit und eine präzise Ausgangssituation für den Zahntechniker bietet.

Eine weitere Ausgestaltung der Erfindung kann vorsehen, dass zur Gewinnung der Daten zur Herstellung des Modells und/oder des Laboranalogs ein CAD-gestütztes stereolithographisches Verfahren verwendet wird und das Modell vorzugsweise aus Kunststoff, besonders bevorzugt aus einem lichthärtenden Kunststoff gefertigt wird.

Dabei können die zuvor aufgenommenen Daten des Scans des Mundraums des Patienten doppelt verwendet werden und es ist eine weitgehend automatisierte Herstellung des Modells mit dem oder den Laboranalogen möglich.

Besonders bevorzugt kann vorgesehen sein, dass eine Fünf-Achs-Bearbeitung, insbesondere eine Fünf-Achsen-CNC-Fräse beim Ausformen und/oder Abtragen, insbesondere zum Fräsen und/oder Schleifen verwendet wird.

Die Fünf-Achs-Bearbeitung ermöglicht eine bessere Genauigkeit bei der Bearbeitung als das Rapid-Prototyping und führt so zu einer Verbesserung der Modelle.

Des Weiteren kann vorgesehen sein, dass zumindest zwei Ausnehmungen in dem dreidimensionalen Modell erzeugt werden oder vorhanden sind und vorzugsweise in jede der Ausnehmungen jeweils eine Hülse oder ein Laboranalog eingesetzt wird, wobei bevorzugt die Lage der Ausnehmung oder der Durchführungen und/oder der crestalen Enden der Laboranaloge zueinander durch Ausformen und/oder Abtragen anhand der Daten des Scans eingestellt werden.

Die Vorteile der Verfahren kommen insbesondere dann zum Tragen, wenn mehrere Laboranaloge verwendet werden, um eine Suprakonstruktion aufzubauen, die an mehreren Dentalimplantate befestigt werden, da mit dem Verfahren insbesondere die Lage und Position der Laboranaloge zueinander genau eingestellt werden können.

Ferner kann erfindungsgemäß vorgesehen sein, dass zumindest eine zylindrische oder konische Ausnehmung in dem Modell erzeugt wird oder vorhanden ist, wobei die Ausnehmung mit einer einzähligen oder mehrzähligen Drehsymmetrie um die Längsachse der Ausnehmung erzeugt wird oder vorhanden ist und eine Hülse oder ein Laboranalog in die Ausnehmung eingesetzt wird, die oder das zumindest bereichsweise die gleiche Drehsymmetrie hat und so nur in einer Ausrichtung oder in der mehrzähligen Ausrichtung in die Ausnehmung passt.

Dies dient dazu die Aufbauten beziehungsweise die Abutments immer in der korrekten Position in dem Modell und später im Mundraum auf den Dentalimplantaten zu befestigen.

Dabei kann vorgesehen sein, dass zumindest eine Hülse oder ein Laboranalog verwendet wird, die oder das vorzugsweise passgenau in die Ausnehmung passt.

Erfindungsgemäße Verfahren können sich auch dadurch auszeichnen, dass bei der Herstellung des Modells eine fest vorgegebene Form für die zumindest eine Ausnehmung vorgegeben wird, die zu einer bestimmten Form einer Hülse oder eines Laboranalogs passt, und/oder eine Form für die Ausnehmung aus einer Mehrzahl verschiedener Formen ausgewählt wird, die zu einer Mehrzahl verschiedener Hülsen oder Laboranaloge passen, wobei vorzugsweise vor der Herstellung des Modells die Form in ein gemessenes virtuelles digitalisiertes Modell des Kiefers als Ausnehmung integriert wird.

Auch kann vorgesehen sein, dass zumindest eine Hülse oder zumindest ein Laboranalog mit einer Rastung in eine Gegenrastung in zumindest einer Ausnehmung einrastet oder mit einem Bajonett-Verschluss in einer gewinkelten Vertiefung zumindest einer Ausnehmung verbunden wird.

Die Längsachse der Ausnehmung ist die Achse, entlang der das Laboranalog in die Ausnehmung ein- und ausgeführt werden kann. Sie liegt meist auf der Mittelachse der Ausnehmung. Unter einer crestalen Richtung wird eine Richtung vom Kieferkamm bei Backenzähnen in okklusaler, also zur Kaufläche hin orientierten Richtung verstanden. Ebenso auf den Kiefer bezogen sind die Richtungsangaben vestibulär (zum Mundvorhof hin), lingual (oral zungenseitig beim Unterkiefer) und palatinal (oral gaumenseitig beim Oberkiefer).

Im Falle von einzähligen Drehsymmetrieachsen ist diejenige einzählige Drehsymmetrieachse gemeint, die mit der Drehsymmetrieachse der zylindrischen oder konischen Grundform der Hülse beziehungsweise des Laboranalogs zusammenfällt. Meist wird als Grundform des Laboranalogs und damit der Ausnehmung nämlich eine zylindrische oder konische Form gewählt, bei der dann durch Rillen, Vertiefungen oder Überstände die Symmetrie dieser Grundform gebrochen wird. Als Symmetrieachse sei dann also die Drehsymmetrieachse der Grundform zu verstehen.

Ferner kann vorgesehen sein, dass zur Herstellung des Modells ein CAD-gestütztes stereolithographisches Verfahren verwendet wird und das Modell vorzugsweise aus Kunststoff, besonders bevorzugt aus einem lichthärtenden Kunststoff gefertigt wird.

Solche Verfahren sind besonders gut zur Realisierung erfindungsgemäßer Verfahren geeignet, da sich die Ausnehmungen so sehr einfach und ohne großen Rechenaufwand auch mit einfachen, leicht erhältlichen Computern in die Modelle des Kiefers integrieren lassen.

Es kann auch vorgesehen sein, dass als letzter Schritt des Verfahrens der Zahnersatz direkt mit einem Laboranalog verschraubt wird. Alternativ kann ein Abutment - bzw. ein Implantataufbau - auf dem Laboranalog montiert und finalisiert werden.

Bei erfindungsgemäßen Verfahren kann bevorzugt auch vorgesehen sein, dass bei der Herstellung der Ausnehmung oder der Durchführung ein Computer verwendet wird, insbesondere eine Digitalisierung des Mundraums des Patienten, wobei die Form der Ausnehmung aus einer Speichereinheit des Computers ausgelesen wird und wobei insbesondere verschiedenen Laboranalogen verschiedene passende Formen der Ausnehmungen zugeordnet werden, die vorzugsweise durch den Computer und/oder einen Anwender unter Verwendung einer Eingabeeinheit ausgewählt werden.

Bei der Verwendung eines Computers zur Herstellung des Modells ergibt sich der besondere kombinatorische Effekt, dass in dem Computer schon alle Daten zur Herstellung des Modells gespeichert sind und daher die Oberfläche des Modells gespeichert ist. Hier muss die Oberfläche des Modells des Kiefers nur noch derart modifiziert werden, dass dort nun an der richtigen Stelle die Ausnehmung angeordnet wird, die zu dem Laboranalog passt, welches am besten geeignet ist oder das vom Computer zuvor ausgewählt wurde oder das als einziges gespeichert ist. Das Modell kann dann gleich mit der modifizierten Oberfläche erzeugt werden, das heißt zusammen mit der passenden Ausnehmung erzeugt werden.

Es kann auch vorgesehen sein, dass ein Laboranalog verwendet wird, das zumindest bereichsweise entlang seiner Längsachse die gleiche Drehsymmetrie wie die Ausnehmung aufweist und das vorzugsweise passgenau in die Ausnehmung passt oder dessen Gewinde genau zum Gegengewinde der Ausnehmung passt.

Bei der Verwendung eines solchen Laboranalogs ist sichergestellt, dass die Ausnehmung zu dem Bereich des Laboranalogs passt und daher das Laboranalog gut in dem Modell befestigt ist.

Dabei kann vorgesehen sein, dass bei der Herstellung des Modells eine fest vorgegebene Form für die Ausnehmung vorgegeben wird, die zu einem bestimmten Laboranalog passt, und/oder eine Form für die Ausnehmung aus einer Mehrzahl verschiedener Formen ausgewählt wird, die zu einer Mehrzahl verschiedener Laboranaloge passen, wobei vorzugsweise vor der Herstellung des Modells die Form in ein gemessenes virtuelles digitalisiertes Modell des Kiefers als Ausnehmung integriert wird.

Hierdurch lässt sich ein besonders anwenderfreundliches und/oder variables Verfahren gestalten. Die Stärke der Erfindung lässt sich gerade mit solchen Möglichkeiten nutzbringend umsetzen.

Die Verwendung von Rechnern zur Umsetzung erfindungsgemäßer Verfahren ist besonders geeignet, da insbesondere die neueren Verfahren zur Herstellung solcher Modelle bereits rechnergestützt eingesetzt werden, so dass nur noch eine einfache Ergänzung der Software zusammen mit den die Oberflächen der Ausnehmungen beziehungsweise der Laboranaloge betreffenden Daten aufgenommen werden müssen, um eine Verbesserung des erzeugten Zahnersatzes zu erreichen.

Dabei kann vorgesehen sein, dass mehrere Formen verschiedener Ausnehmungen in der Speichereinheit gespeichert sind und eine Ausnehmung über eine Eingabeeinrichtung auswählbar ist und/oder von dem Rechner in Abhängigkeit von den Daten zum Erstellen des Modells vorgegeben sind, wobei insbesondere die Ausnehmung aus einer durch den Rechner bestimmten Vorauswahl von zu den Ausnehmungen passenden Laboranalogen auswählbar ist. Offenbart wird auch ein Verfahren zur Herstellung eines Laboranalogs, bei dem das crestale Ende des Laboranalogs mit einer Genauigkeit von mindestens ± 10 µm, bevorzugt mit einer Genauigkeit von mindestens ± 5 µm den Daten des dreidimensionalen Scans des Mundraums des Patienten entspricht, wenn es in ein zugehöriges Modell des Kiefers eingesetzt ist. Ferner offenbart wird ein Modell zumindest eines Teilbereichs eines Kiefers hergestellt nach einem solchen Verfahren zur Herstellung eine Modells umfassend wenigstens eine Ausnehmung, bei dem die Abmessung der wenigstens einen Ausnehmung und vorzugsweise die Orientierung und die Lage aller Ausnehmungen zueinander eine Genauigkeit von mindestens ± 10 µm, bevorzugt mit einer Genauigkeit von mindestens ± 5 µm bezüglich der Daten des dreidimensionalen Scans des Mundraums des Patienten aufweist oder aufweisen, so dass die Orientierung und Lage der crestalen Enden der eingesetzten Laboranaloge im Modell mit dieser Genauigkeit der Orientierung und Lage aller crestalen Enden der Dentalimplantate entspricht. Ebenfalls offenbart wird ein Modell zumindest eines Teilbereichs eines Kiefers hergestellt nach einem solchen Verfahren zur Herstellung eines Modells umfassend wenigstens eine Durchführung und wenigstens eine Ausnehmung, bei dem die Lage der wenigstens einen Durchführung und vorzugsweise die Orientierung und die Lage aller Durchführungen zueinander eine Genauigkeit von mindestens ± 10 µm, bevorzugt mit einer Genauigkeit von mindestens ± 5 µm bezüglich der Daten des dreidimensionalen Scans des Mundraums des Patienten aufweist oder aufweisen, so dass die Orientierung und Lage der crestalen Enden der mit den Stiften durch die Durchführungen fixierten Laboranaloge im Modell mit dieser Genauigkeit der Orientierung und Lage aller crestalen Enden der Dentalimplantate entspricht.
Ein solches Modell liefert eine Basis für die Verwendung eines rotationsfesten oder sogar positionsfesten Aufbaus zur Herstellung eines qualitativ hochwertigen Zahnersatzes.

Dabei kann vorgesehen sein, dass in der Ausnehmung eine Gegenrastung vorgesehen ist, die in eine Rastung an dem Laboranalog greift und das Laboranalog positionsfest hält.

Dies dient wieder dazu, ein Laboranalog, das in die Ausnehmung des Modells eingesetzt wird, besser und genauer zu fixieren.

Eine mögliche Anwendung verschiedener Laboranaloge und die Auswahl eines besonders geeigneten Laboranalogs eröffnet die Möglichkeit zu einer weiteren Verbesserung des erzeugten Endergebnisses.

Der Erfindung liegt die überraschende Erkenntnis zugrunde, dass bei der Anwendung moderner Verfahren, wie "Rapid-Prototyping" und/oder stereolithographischen Verfahren, zur Herstellung von Modellen von Kiefern eine Verbesserung der Qualität und vor allem der Genauigkeit des Zahnersatzes dadurch möglich ist, dass die hohe Genauigkeit des Scans durch die Verwendung der Daten des Scans beim automatischen Ausformen oder Abtragen bei der Herstellung des Modells beziehungsweise bei der Herstellung des Laboranalogs oder der Laboranaloge auch für das Modell beziehungsweise für das Laboranalog oder die Laboranaloge reproduziert werden kann. Dies kann erfindungsgemäß bevorzugt mit Hilfe von Fünf-Achs-Verfahren wie Fünf-Achsen-Schleifern, -Fräsen, -Schneiden und/oder -Bohrern geschehen, die anhand der Daten des Scans des Mundraums des Patienten gesteuert werden. Durch verschiedene andere erfindungsgemäße Maßnahmen kann es dabei gelingen, das Laboranalog besonders ortsgenau, das heißt, rotationsfest oder sogar positionsfest im Modell anzuordnen.

Durch die erfindungsgemäßen Verfahren gelingt es nicht nur die Lage eines einzelnen crestalen Endes eines einzelnen Laboranalogs exakt vorzugeben, sondern vor allem auch die Position, die Ausrichtung und die Lage verschiedener crestaler Enden mehrerer Laboranaloge zueinander genau einzustellen. Dadurch ergeben sich Vorteile beim Herstellen von Suprakonstruktionen, die an mehreren Dentalimplantaten befestigt werden.

Zudem kann die passende Form der Ausnehmung gleich beim Erzeugen der Ausnehmung in dem Modell des Kiefers erzeugt werden, wenn die für die Ausnehmung notwendige Oberfläche gleich in ein virtuelles Modell integriert wird und beim Herstellen jede Ausnehmung gleich entsprechend erzeugt wird. Außerdem kann auch gleich eine besonders gut passende Ausnehmung mit einem dazu passenden Laboranalog ausgewählt werden, wenn mehrere verschiedene Laboranaloge und die dazu passenden Ausnehmungen gespeichert sind und so zur Auswahl stehen.

Im Folgenden werden Ausführungsbeispiele der Erfindung anhand von acht schematisch dargestellten Figuren erläutert, ohne jedoch dabei die Erfindung zu beschränken. Dabei zeigt:
- Figur 1:: eine schematische perspektivische Ansicht eines Laboranalogs mit einem Vorsprung zur Bildung eines Bajonett-Verschlusses zur Umsetzung eines erfindungsgemäßen Verfahrens;
- Figur 2:: eine schematische perspektivische und transparente Teilansicht eines Modells eines Kiefers zur Aufnahme des Laboranalogs nach Figur 1 zur Umsetzung eines erfindungsgemäßen Verfahrens;
- Figur 3:: eine schematische perspektivische Ansicht einer Hülse mit Drehsymmetriebrechung zur Umsetzung eines erfindungsgemäßen Verfahrens;
- Figur 4:: eine schematische perspektivische und transparente Teilansicht eines Modells eines Kiefers zur Aufnahme einer Hülse nach Figur 3 zur Umsetzung eines erfindungsgemäßen Verfahrens;
- Figur 5:: eine schematische perspektivische Ansicht eines alternativen Laboranalogs zur Umsetzung eines erfindungsgemäßen Verfahrens;
- Figur 6:: eine schematische perspektivische transparente Teilansicht eines Modells eines Kiefers mit einer Durchführung zur Fixierung eines Laboranalogs nach Figur 5 zur Umsetzung eines erfindungsgemäßen Verfahrens;
- Figur 7:: eine schematische perspektivische Ansicht eines weiteren Laboranalogs zur Umsetzung eines erfindungsgemäßen Verfahrens;
- Figur 8:: einen Ausschnitt aus einer schematischen Querschnittansicht eines Modells eines Kiefers zur Umsetzung eines erfindungsgemäßen Verfahrens.

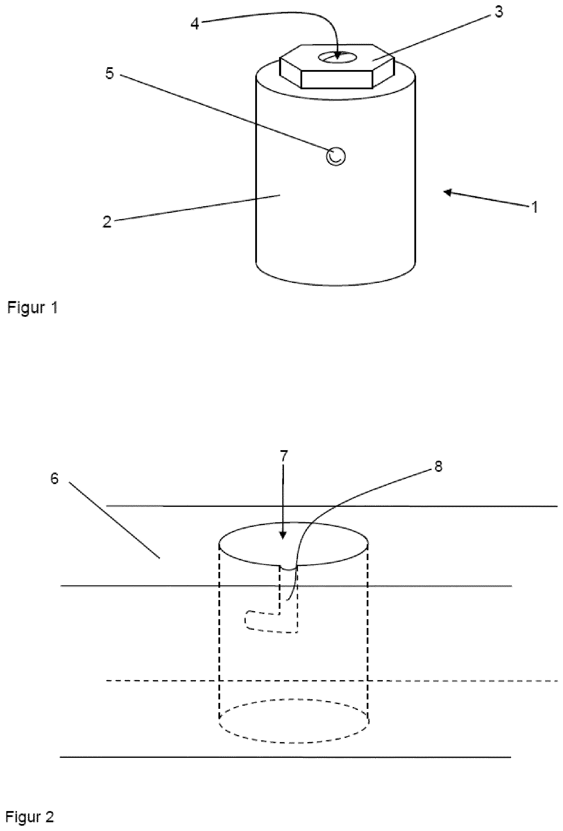

Figur 1 zeigt ein Laboranalog 1, das zur Umsetzung eines erfindungsgemäßen Verfahrens geeignet ist. Das Laboranalog 1 hat eine zylindrische Basis 2, die aus Metall gefertigt ist. Das Laboranalog 1 kann beispielsweise aus Metall gefertigt sein. An der Oberseite des Laboranalogs 1 ist ein sechseckiger Aufbau 3 angeordnet

Wenn ein Laboranalog 1 oder eine Hülse mit einem sechseckigen Aufbau 3 verwendet wird, hat das Abutment hierzu fußseitig eine sechszählige Drehsymmetrie, das heißt, dass der Bereich und die Oberfläche des Abutments durch sechs verschiedene Drehungen um die Längsachse von kleiner gleich 360° geometrisch in sich selbst überführt werden kann. Unter einem Abutment kann auch ein Implantataufbau mit Anschlußgeometrie verstanden werden. Ein rechteckiger oder elliptischer Aufbau würde zu einer zweizähligen Symmetrie führen und kann ebenso verwendet werden. So kann das Abutment auf dem Laboranalog 1 nur in definierten Winkeln aufgesetzt werden.

Im Zentrum des Laboranalogs 1 ist ein zylindrisches Loch 4 mit einem Innengewinde 4 angeordnet. Das Loch 4 erstreckt sich bis tief ins Innere der Basis 2 entlang der Symmetrieachse der zylindrischen Basis 2. Das Loch 4 reicht jedoch nicht bis zur gegenüberliegenden Seite des Laboranalogs 1.

Auf der Mantelfläche der zylindrischen Basis 2 ist ein Vorsprung 5 befestigt, der die Form einer Halbkugel haben kann. Der Vorsprung 5 soll einen Bajonett-Verschluss mit einer entsprechenden Ausnehmung in einem Modell eines Kiefers eines Patienten bilden.

Ein Teil eines solchen Modells 6 ist in Figur 2 in einer transparenten schematischen Ansicht gezeigt. Das Modell 6 setzt sich nach rechts und links fort, wie durch die nicht abgeschlossenen Geraden in Figur 2 angedeutet ist. Tatsächlich wird das Modell 6 keine solchen Kanten, wie durch die Geraden dargestellt, aufweisen, sondern einen Kiefersattel mit oder ohne Zähne zeigen, je nachdem, wie die Situation im Mundraum des Patienten ist.

In dem Modell 6 befindet sich eine Ausnehmung 7, die sich als zylindrisches Loch in das Modell 6 erstreckt. Der Durchmesser der Ausnehmung 7 ist etwas größer als der des Laboranalogs 1 nach Figur 1, so dass das Laboranalog 1 in die Ausnehmung gesteckt werden kann. In der Zylinderwand der Ausnehmung 7 ist eine gewinkelte Rille 8 vorgesehen, die mit dem Vorsprung 5 nach Figur 1 einen Bajonett-Verschluss bildet. Das Laboranalog 1 kann in dem Modell 6 befestigt werden, indem das Laboranalog 1 in die Ausnehmung 7 gesteckt wird, wobei der Vorsprung 5 in der Rille 7 geführt wird. An der Winkelung der Rille 7 kann das Laboranalog 1 nicht weiter eingesteckt werden, sondern wird im Uhrzeigersinn gedreht, bis der Anschlag der Rille 7 erreicht ist und der Vorsprung 5 ein weiteres Drehen blockiert.

Das Laboranalog 1 wird aus einer Hülse (nicht gezeigt) gefertigt, die etwas länger als das gezeigte Laboranalog 1 ist, aber bereits den gleichen Durchmesser der Basis 2 und einen sechseckigen Aufbau 3 hat und auch bereits den Vorsprung 5 aufweist. Die Hülse wird über den Bajonett-Verschluss 5, 8 fest mit dem Modell 6 verbunden.

Die Hülse wird anschließend mit Hilfe einer Fünf-Achsen-Fräse abgefräst, wobei die Fünfachsenfräse automatisch anhand von zuvor aufgenommenen Daten eines dreidimensionalen Scans des Mundraums des Patienten gesteuert wird. Dabei wird die Lage und die Position des crestalen Endes der Hülse mit einer hohen Genauigkeit abgefräst, so dass dieses Ende nach dem Abfräsen sehr genau der Lage und der Position des crestalen Endes des Dentalimplantats im Kiefer des Patienten entspricht. Dabei wird insbesondere die Lage und Ausrichtung mehrerer Dentalimplantate zueinander sehr genau in dem Modell 6 wiedergegeben. Die so aus den Hülsen hergestellten Laboranaloge 1 in dem Modell 6 sind dann also sehr genau zur Herstellung des Aufbaus, insbesondere einer Suprastruktur, die an mehreren Dentalimplantaten verankert ist, geeignet.

Das Modell 6 kann dagegen zunächst durch einfaches Rapid-Prototyping hergestellt werden, da die Ungenauigkeiten bei der Herstellung des Modells durch die Nachbearbeitung mit der Fünf-Achsen-Fräse ausgeglichen werden.

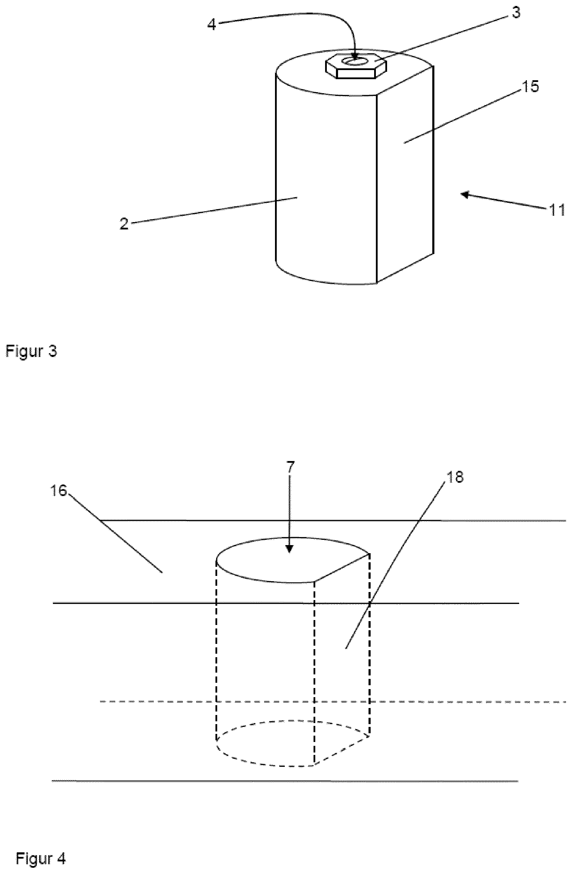

Figur 3 zeigt eine schematische perspektivische Ansicht eine Hülse 11 für ein alternatives Laboranalog, die eine Basis 2 mit einer Abflachung 15 hat. Die Abflachung 15 dient dazu, dass die Hülse 11 und das aus der Hülse 11 gefertigte Laboranalog nur in einer Position in das passende Modell 16 nach Figur 4 eingesteckt werden kann. Die Hülse 11 hat ebenfalls einen sechseckigen Aufbau 3 zur Orientierung eines Abutments und ein Loch 4 mit einem Innengewinde zur Befestigung des Abutments. Die Hülse 11 ist also ähnlich dem Laboranalog 1 nach Figur 1. Grundsätzlich ist es vorstellbar, wenn auch unwahrscheinlich, dass die Hülse 11 in ihrer unbearbeiteten Form genau zur Situation im Mundraum des Patienten passt. Dann kann die Hülse 11 direkt als Laboranalog verwendet werden. Es besteht also kein prinzipieller Unterschied zwischen der Hülse 11 und dem fertigen Laboranalog. Die Hülse 11 sollte jedoch im Normalfall länger sein, da diese nicht künstlich verlängert werden kann, sondern abgefräst oder anders abgetragen wird, um jede mögliche Länge verschiedener Laboranaloge aus der Hülse 11 herstellen zu können.

Das Modell 16 hat eine Ausnehmung 7, die ebenfalls eine Abflachung 18 umfasst, so dass die Form der Ausnehmung 7 zur Form der Basis 2 der Hülse 11 passt. Nach Einsetzen der Hülse 11 wird mit einer Fünf-Achs-Bearbeitung, vorzugsweise mit einer Fünf-Achsen-CNC-Fräse, die eingesetzte Hülse 11 am crestalen Ende (in Figur 3 oben) vollautomatisch abgefräst. Die Daten hierfür erhält die Fünf-Achsen-CNC-Fräse aus einem elektronischen Speicher, in dem die Daten eines Scans des Mundraums des Patienten hinterlegt ist. Bei dem Scan wurde die Situation im Mundraum und dabei insbesondere die Position und die Lage aller Dentalimplantate im Kiefer des zu behandelnden Patienten mit hoher Genauigkeit (mit weniger als 10 µm Fehler) aufgenommen.

Während also das Modell 16 mit Hilfe von Rapid-Prototyping aus den gleichen Daten aber mit geringerer Genauigkeit hergestellt wurde, können durch das Abtragen der Hülsen 11 mit der genaueren Fünf-Achs-Bearbeitung Laboranaloge erzeugt werden, deren Lage und Ausrichtung bis auf mindestens 10 µm genau der Situation, insbesondere der Lage und Ausrichtung der Dentalimplantate im Mundraum des Patienten entsprechen. Insbesondere wenn eine Suprakonstruktion an mehreren Dentalimplantaten befestigt werden soll, ist die hohe Genauigkeit der vorliegenden Methode vorteilhaft, um Spannungen zu vermeiden, die durch nicht exakt genug gefertigte Suprakonstruktionen durch die Dentalimplantate auf den Kiefer ausgeübt werden.

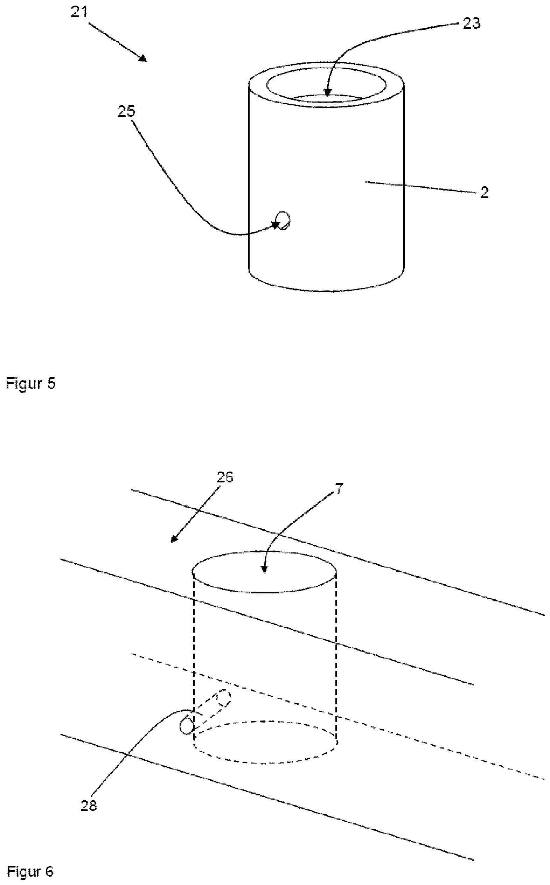

Figur 5 zeigt eine schematische perspektivische Ansicht eines alternativen Laboranalogs 21 zur Umsetzung eines erfindungsgemäßen Verfahrens. Das Laboranalog 21 hat eine zylindrische Basis 2, an deren oberen crestalen Ende eine Vertiefung 23 vorgesehen ist. Die Vertiefung 23 dient der Aufnahme eines Abutments zur Herstellung eines Aufbaus, der beispielsweise als Zahnersatz oder als Suprakonstruktion im Mundraum eines Patienten auf einem Dentalimplantat mit gleichem crestalen Ende eingesetzt werden soll. In der Vertiefung 23 befindet sich ein Loch mit einem Innengewinde (nicht gezeigt) zur Befestigung des Abutments. In dem Zylindermantel des Laboranalogs 21 ist eine Aufnahmeöffnung 25 vorgesehen, die in eine zylindrische Vertiefung in der Basis 2 des Laboranalogs 21 mündet.

Das Laboranalog 21 ist ein Standardteil, bei dem die Lage und Ausrichtung der Aufnahmeöffnung 25 und der zylindrischen Vertiefung im Mantel der Basis 2 mit einer hohen Genauigkeit beispielsweise auf mindestens 6 µm genau gefertigt wurde.

Figur 6 zeigt eine schematische perspektivische und transparente Teilansicht eines Modells 26 eines Kiefers mit einer Durchführung 28 zur Fixierung eines Laboranalogs 21 nach Figur 5 in einer Ausnehmung 7 des Modells 26 zur Umsetzung eines erfindungsgemäßen Verfahrens. Die Durchführung 28 hat die gleiche Geometrie wie die zylindrische Vertiefung im Mantel der Basis 2 des Laboranalogs 21. Das Laboranalog 21 wird von oben in die Ausnehmung 7 gesteckt, so dass die zylindrische Vertiefung im Mantel der Basis 2 die Verlängerung der Durchführung 28 bildet. Anschließend kann das Laboranalog 21 mit einem Stift (nicht gezeigt), der zur Geometrie der Durchführung 28 und der zylindrischen Vertiefung im Mantel der Basis 2 passt, fixiert werden, indem der Stift durch die Durchführung 28 in die zylindrische Vertiefung im Zylindermantel der Basis 2 gesteckt wird.

Auf dem Laboranalog 21 kann eine Markierung vorgesehen sein, die die Lage der Öffnung 25 angibt, um dem Zahntechniker das Einsetzen des Laboranalogs 21 zu erleichtern.

Das Modell 26 wird zunächst ohne die Durchführung 28 mit Rapid-Prototyping gefertigt. Dadurch hat das Modell 26 eine Genauigkeit von circa 60 µm. Die Daten, aus denen das Modell 26 mit Rapid-Prototyping gefertigt wurde, sind dabei exakter, beispielsweise bis auf 3 µm genau. Das Modell 26 ohne Durchführung 28 wird nun in eine Halterung einer Bohrmaschine oder eine andere Vorrichtung zum Erzeugen einer Durchführung 28 mit einer hohen Genauigkeit eingespannt und fixiert, die eine Bohrung mit einer hohen Genauigkeit ermöglicht, beispielsweise mit einer Genauigkeit die so hoch ist, wie die Genauigkeit der Lage der zylindrischen Vertiefung im Mantel der Basis 2 in dem Laboranalog 21 (6 µm). Ein Computer berechnet aus den Daten die Lage der Bohrung, um das Laboranalog 21 bei Fixierung mit dem Stift in eine Position zu bringen, damit die Lage des crestalen Endes des Laboranalogs 21 mit der Lage des crestalen Endes des Dentalimplantats im Kiefer des Patienten übereinstimmt. Anschließend wird die Durchführung 28 in dem Modell 26 erzeugt.

In gleicher Art und Weise werden gegebenenfalls auch die anderen Durchführungen (nicht gezeigt) in dem gleichen Modell 26 erzeugt und so die Lage und Position der crestalen Enden der Laboranaloge 21 zueinander so eingestellt, dass diese der Lage und Position der crestalen Enden aller Dentalimplantate im Kiefer des Patienten zueinander entsprechen.

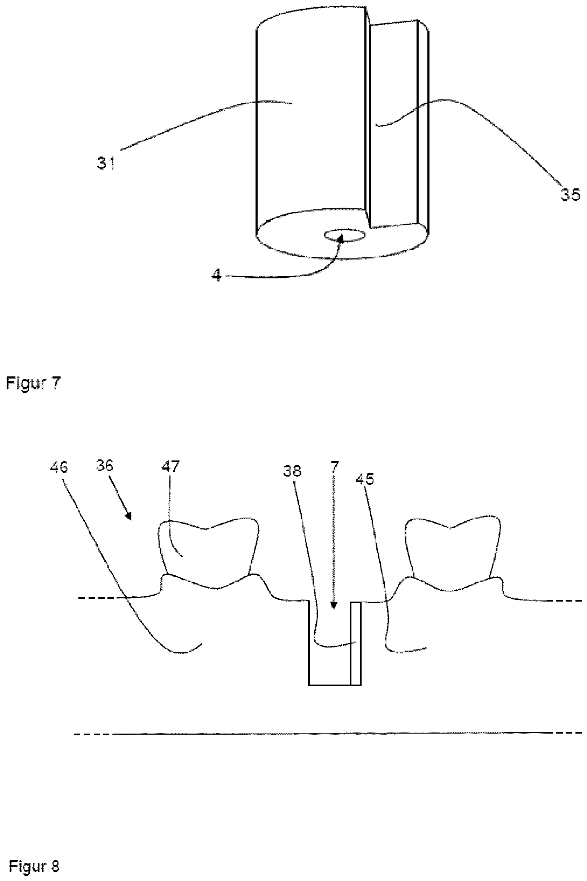

Figur 7 zeigt eine schematische perspektivische Ansicht eines weiteren Laboranalogs 31 zur Umsetzung eines erfindungsgemäßen Verfahrens. Das Laboranalog 31 ist ein zylindrischer Körper mit einer Rille 35. Entlang der Zylinderachse des Laboranalogs 31 ist ein Loch 4 mit einem Innengewinde vorgesehen. In das Innengewinde kann ein Abutment geschraubt werden. Das crestale Ende ist in Figur 7 im Gegensatz zu den Figuren 1, 3 und 5 also unten.

Figur 8 zeigt eine schematische Querschnittansicht eines Ausschnitts eines erfindungsgemäßen Modells 36 eines Kiefers. In dem Modell 36 ist eine Ausnehmung 7 zur Aufnahme eines Laboranalogs 31 angeordnet. Als passendes Gegenstück zum Laboranalog 31 nach Figur 7 umfasst das Modell 36 einen Vorsprung 38, der in die Rille 35 des Laboranalogs 31 passt und so die Position des Laboranalogs 31 eindeutig festlegt.

Das Modell 36 umfasst Zahnfleisch 45, Kiefersattel 46 und Zähne 47, beziehungsweise genaugenommen Modelle davon. Das Modell 36 ist aus Kunststoff gefertigt und mit Hilfe von Daten erzeugt, die mit einem stereolithographischen Verfahren gewonnen wurden, indem ein Scan eines Mundraums eines Patienten durchgeführt wurde. Der gegenüberliegende Kieferteil (nicht gezeigt) kann ebenfalls Teil des Modells 36 sein, um die Situation beim Kauen, beziehungsweise bei geschlossenem Mund darstellen zu können. Das Modell 36 des Kiefers kann sich also nicht nur nach rechts und links fortsetzen, wie durch die gestrichelten Linien angedeutet.

Das Modell 36 umfasst an einer Stelle zwischen den Zähnen 47 die Ausnehmung 7 in Form eines zylindrischen Lochs. Die zylindrische Drehsymmetrie der Ausnehmung 7 ist durch den Vorsprung 38 gebrochen. Dadurch ist die genaue Position eines Laboranalogs 31, wie dem nach Figur 7, im Modell 36 fixiert, das heißt sowohl rotationsfest als auch positionsfest.

Für ein Laboranalog 21 beziehungsweise eine Hülse 11, wie in Figur 3 oder 5 gezeigt, wäre die Ausnehmung 7 in einem passenden Modell als zylindrisches Loch mit einer Abflachung oder einer Durchführung durch das Zahnfleisch 45 am Kiefersattel 46 aufgebaut, wodurch das Laboranalog 21 beziehungsweise die Hülse 11 rotationsfest gehalten wird. Der Vorzug dieses Aufbaus ist darin zu sehen, dass das Laboranalog 31 schnell herausnehmbar ist, während das Laboranalog 21 nach Figur 5 besser und genauer fixierbar ist.

Im Folgenden wird ein weiteres besonders bevorzugtes Ausführungsbeispiel eines erfindungsgemäßen Verfahrens erläutert. Der Mundraum eines Patienten wird vermessen, um einen passenden Zahnersatz zu erzeugen. Dazu wird ein dreidimensionales Bild des Mundraums, beziehungsweise insbesondere des betroffenen Teils des Kiefers aufgenommen. Diese Daten werden in einem Speicher eines Computers gespeichert. Bei der Aufnahme werden die Positionen aller Dentalimplantate im Kiefer des Patienten genau festgelegt, indem Standard-Positionsmarkierungen für den Scan in die Dentalimplantate eingesetzt werden, die beim Scan eindeutig identifizierbar sind und so die Lage und Ausrichtung der Dentalimplantate durch den Scan genau bestimmbar ist.

Aus den Daten wird ein virtuelles dreidimensionales CAD-Modell des Kiefers oder des Teils des Kiefers in einem Rechner des Computers berechnet. In dem Speicher des Computers sind verschiedene Ausnehmungen 7 oder Ausnehmungsgrundformen gespeichert, die verschiedenen Laboranalogen 1, 21, 31 beziehungsweise Hülsen 11 zugeordnet sind. Der Computer berechnet, wie die verschiedenen Ausnehmungen 7 in dem Modell 6, 16, 26, 36 angeordnet werden könnten. Die stabilste oder sinnvollste Variante wird ausgewählt oder die stabilsten oder sinnvollsten Varianten werden über eine Anzeigeeinrichtung vorgeschlagen. Als Kriterium kann beispielsweise verwendet werden, wie dick die Wandstärke des Modells 6, 16, 26, 36 im Bereich der Ausnehmung 7 in dem Kiefersattel 46 für die verschiedenen Ausnehmungen 6, 16, 26, 36 sind oder welches für die Position im Kiefer das geeignetste Laboranalog 1, 21, 31 beziehungsweise die geeignetste Hülse 11 ist.

Der Anwender kann auch alternativ aus allen vorhandenen gespeicherten Ausnehmungen 7 diejenige auswählen, die er für an geeignetsten hält. Wobei auch vorgesehen sein kann, dass der Computer durch Berechnung darauf hinweist, wenn eine ausgewählte Ausnehmung 7 nicht möglich oder nicht sinnvoll, also zum Beispiel nicht stabil genug erscheint. Ebenso kann auch nur eine mögliche Form einer Ausnehmung 7 für eine bestimmte Sorte von Laboranalogen 1, 21, 31 beziehungsweise Hülsen 11 gespeichert sein.

Anschließend wird die über eine Eingabeeinrichtung die ausgewählte Ausnehmung 7 oder die vorgegebene Ausnehmung 7 mit dem virtuellen Modell des Kiefers kombiniert. Dazu wird die Ausnehmung 7 als Oberfläche des virtuellen Modells an der Stelle in das virtuelle Modell des Kiefers gerechnet, an dem das Dentalimplantat im Kiefer des Patienten angeordnet ist. Aus dem neuen virtuellen Modell wird dann ein tatsächliches Modell 6, 16, 26, 36 mit bekannten Verfahren, wie zum Beispiel "Rapid-Prototyping"-Verfahren erzeugt. Dazu ist der Computer an eine Herstellungseinrichtung angeschlossen, mit der solche Verfahren umsetzbar sind.

Die Ausnehmung 7 kann auch noch gar nicht in dem Modell 6, 16, 26, 36 enthalten sein oder ist nur als Vorform also zu klein ausgestaltet. Die endgültige Ausformung der Ausnehmung 7 geschieht mit einem exakteren Herstellungsverfahren als dem Rapid-Prototyping. Dazu kommen beispielsweise Fünf-Achs-Bearbeitungsverfahren in Frage, die die höhere Genauigkeit der Daten des Scans nutzen, um die Ausnehmung 7 und gegebenenfalls deren Lage und Ausrichtung zueinander mit einer größeren Genauigkeit zu erzeugen. Es erfolgt also eine Feinbearbeitung der Ausnehmung 7, so dass die Lage, die Ausrichtung und die Tiefe der Ausnehmung 7 in dem Modell und gegebenenfalls der Ausnehmungen untereinander derart gefertigt wird, dass die crestalen Enden der eingesetzten Laboranaloge 1, 21, 31 genau mit den Ausrichtungen, Lagen und Positionen der crestalen Enden der Dentalimplantate im Kiefer und gegebenenfalls der Dentalimplantate untereinander übereinstimmen.

Anschließend kann also entweder die Ausnehmung 7 mit einem Präzisionswerkzeug beispielsweise durch eine Fünf-Achs-Bearbeitung anhand der genaueren Daten des Scans bearbeitet werden oder alternativ eine Durchführung exakt gebohrt werden, um die Position und Lage eines vorgefertigten Laboranalogs 1, 21, 31 mit hoher Genauigkeit zu definieren. Eine weitere Alternative erlaubt es, eine in die Ausnehmung 7 eingesetzte Hülse 11 zusätzlich oder alternativ mit einem Präzisionswerkzeug beispielsweise durch eine Fünf-Achs-Bearbeitung anhand der genaueren Daten des Scans abzutragen, um genau die richtige Länge und Anordnung des so entstehenden Laboranalogs 1, 21, 31 herzustellen.

Auf dem Aufbau 3 des Laboranalogs 1, 21, 31 kann dann der eigentliche Zahnersatz in einer realistischen Umgebung mit exakter Lage erzeugt werden. Immer wenn das Laboranalog 1, 21, 31 oder die Hülse 11 aus dem Modell 6, 16, 26, 36 entfernt und wieder eingesetzt wird, wird es sich an der gleichen Position im Modell 6, 16, 26, 36 des Kiefers befinden. Damit kann sichergestellt werden, dass der Zahnersatz genau die richtige Form hat. Zudem wird der Zahnersatz auch in der gleichen Position im Mundraum des Patienten auf dem eigentlichen Dentalimplantat angeordnet sein, so dass eine besonders gute Passform sichergestellt ist.

### Bezugszeichenliste

- 1, 21, 31: Laboranalog
- 2: Basis
- 3: Aufbau
- 4: Loch
- 5: Vorsprung
- 6, 16, 26, 36: Modell
- 7: Ausnehmung
- 8: Rille
- 11: Hülse
- 15: Abflachung
- 18: Abflachung
- 23: Vertiefung
- 25: Aufnahmeöffnung
- 28: Durchführung
- 35: Rille
- 38: Vorsprung
- 45: Zahnfleisch
- 46: Kiefersattel
- 47: Zahn

## Patentansprüche

1. Verfahren zur Herstellung eines Laboranalogs (1, 21, 31) für Dentalimplantate umfassend die Schritte:
Bereitstellen wenigstens einer Hülse (11) umfassend eine zylindrische Vertiefung (4) mit einem Innengewinde;
Bereitstellen eines dreidimensionalen Modells (6, 16, 26, 36) zumindest eines Teilbereichs eines Kiefers eines Patienten, der zumindest ein Dentalimplantat hat;
Einsetzen zumindest einer der genannten Hülse (11) In zumindest eine zur Hülse (11) passende
Ausnehmung (7) des Modells (6, 16, 26, 36), wobei jede Ausnehmung (7) in einem Bereich des Modells (6, 16, 26, 36) angeordnet ist, in dem im Kiefer des Patienten ein Dentalimplantat angeordnet ist; und
vollautomatisches Abtragen zumindest einer eingesetzten Hülse (11), wobei das Abtragen durch die Daten eines dreidimensionalen Scans des Mundraums des Patienten gesteuert wird, wobei die Daten zuvor aufgenommen wurden, und die Hülse (11) mit Hilfe der Daten soweit abgetragen wird, dass das crestale Ende des aus der Hülse (11) hergestellten Laboranalogs (1, 21, 31) mit dem crestalen Ende des Dentalimplantats im Kiefer des Patienten übereinstimmt.

2. Verfahren nach Anspruch 1, **dadurch gekennzeichnet, dass**
die Hülse (11) von der crestalen Richtung her abgetragen, Insbesondere geschnitten, abgeschliffen und/oder abgefräst wird.

3. Verfahren nach einem der vorangehenden Ansprüche, **dadurch gekennzeichnet, dass** das vollautomatische Abtragen, das insbesondere computergestützt durchgeführt wird, mit einer Genauigkeit von mindestens ± 10 [micro]m, bevorzugt mit einer Genauigkeit von mindestens ± 5 [micro]m durchgeführt wird.

4. Verfahren nach einem der vorangehenden Ansprüche, **dadurch gekennzeichnet, dass** die Daten des dreidimensionalen Scans des Mundraums des Patienten dazu verwendet werden, das dreidimensionale Modell (6, 16, 26, 36) des Kiefers oder Kieferbereichs herzustellen, insbesondere vollautomatisch herzustellen, wobei bevorzugt das Modell (6, 16, 26, 36) durch Rapid Prototyping hergestellt wird, besonders bevorzugt mit einer Genauigkeit von zumindest ±100 [micro]m, ganz besonders bevorzugt mit einer Genauigkeit von zumindest ±60 [micro]m.

5. Verfahren nach einem der vorangehenden Ansprüche, **dadurch gekennzeichnet, dass** zur Gewinnung der Daten zur Herstellung des Modells (6, 16, 26, 36) ein CAD-gestütztes stereolithographisches Verfahren verwendet wird und das Modell (6, 16, 26, 36) vorzugsweise aus Kunststoff, besonders bevorzugt aus einem lichthärtenden Kunststoff gefertigt wird.

6. Verfahren nach einem der vorangehenden Ansprüche, **dadurch gekennzeichnet, dass** eine Fünf-Achs-Bearbeitung, insbesondere eine Fünf-Achsen-CNC-Fräse beim Abtragen, insbesondere zum Fräsen und/oder Schleifen verwendet wird.

7. Verfahren nach einem der vorangehenden Ansprüche, **dadurch gekennzeichnet, dass** zumindest zwei Ausnehmungen (7) in dem dreidimensionalen Modell (6, 16, 26, 36) erzeugt werden oder vorhanden sind und vorzugsweise in jede der Ausnehmungen (7) jeweils eine der genannten Hülse (11) eingesetzt wird, wobei bevorzugt die Lage der Ausnehmung (7) und/oder der crestalen Enden der Laboranaloge (1, 21, 31) zueinander durch Ausformen und/oder Abtragen anhand der Daten des Scans eingestellt werden.

8. Verfahren nach einem der vorangehenden Ansprüche, **dadurch gekennzeichnet, dass** zumindest eine zylindrische oder konische Ausnehmung (7) in dem Modell (6, 16, 26, 36) erzeugt wird oder vorhanden ist, wobei die Ausnehmung (7) mit einer einzähligen oder mehrzähligen Drehsymmetrie um die Längsachse der Ausnehmung (7) erzeugt wird oder vorhanden ist und eine der genannten Hülse (11) in die Ausnehmung (7) eingesetzt wird, die zumindest bereichsweise die gleiche Drehsymmetrie hat und so nur In einer Ausrichtung oder in der mehrzähligen Ausrichtung in die Ausnehmung (7) passt.

9. Verfahren nach einem der Ansprüche 5 bis 8, **dadurch gekennzeichnet, dass** bei der Herstellung des Modells (6, 16, 26, 36) eine fest vorgegebene Form für die zumindest eine Ausnehmung (7) vorgegeben wird, die zu einer bestimmten Form einer der genannten Hülse (11) passt, und/oder eine Form für die Ausnehmung (7) aus einer Mehrzahl verschiedener Formen ausgewählt wird, die zu einer Mehrzahl der genannten Hülsen (11) passen, wobei vorzugsweise vor der Herstellung des Modells (6, 16, 26, 36) die Form in ein gemessenes virtuelles digitalisiertes Modell (6, 16, 26, 36) des Kiefers als Ausnehmung (7) integriert wird.

## Claims

1. Method for producing a laboratory analogue (1, 21, 31) for dental implants comprising the steps of:
providing at least one sleeve (11) comprising a cylindrical depression (4) having an internal thread;
providing a three-dimensional model (6, 16, 26, 36) of at least a partial region of a jaw of a patient who harbours at least one dental implant;
inserting at least one of the said sleeve (11) into at least one recess (7) of the model (6, 16, 26, 36) matching the sleeve (11), whereby each recess (7) is arranged in a region of the model (6, 16, 26, 36), in which a dental implant is arranged in the jaw of the patient;
and
fully-automatic ablation of at least one inserted sleeve (11), wherein the ablation is controlled through three-dimensional scanning data of the oral space of the patient,
wherein the data was recorded previously, and the sleeve (11) is ablated based on such data to the extent that the crestal end of the laboratory analogue (1, 21, 31) produced from said sleeve (11) coincides with the crestal end of the dental implant in the jaw of the patient.

2. Method according to claim 1, **characterised in that**
the sleeve (11) is ablated, in particular cut, ground and/or milled off, proceeding from crestal direction.

3. Method according to any one of the preceding claims, **characterised in that**
the fully-automatic ablation, which in particular is carried out in computer-supported manner, is carried out at an accuracy of at least ± 10 [micro]m, preferably at an accuracy of at least ± 5 [micro]m.

4. Method according to any one of the preceding claims, **characterised in that**
the three-dimensional scanning data of the oral space of the patient is used in the production, in particular fully-automatic production, of the three-dimensional model (6, 16, 26, 36) of the jaw or region of the jaw, wherein the model (6, 16, 26, 36) is preferably produced by means of rapid prototyping, particularly preferably at an accuracy of at least ± 100 [micro]m, yet more preferably at an accuracy of at least ± 60 [micro]m.

5. Method according to any one of the preceding claims, **characterised in that**
a CAD-based stereolithographic method is used to obtain the data for production of the model (6, 16, 26, 36), and **in that** the model (6, 16, 26, 36) preferably is fabricated from plastic material, particularly preferably from a light-curing plastic material.

6. Method according to any one of the preceding claims, **characterised in that**
a five-axis processing, in particular a five-axis CNC milling machine, is used in ablation, in particular for milling and/or grinding.

7. Method according to any one of the preceding claims, **characterised in that**
at least two recesses (7) are generated or exist in the three-dimensional model (6, 16, 26, 36) and preferably one of the said sleeve (11) each is to be inserted into each of the recesses (7), wherein the position of the recess (7) and/or crestal ends of the laboratory analogues (1, 21, 31) with respect to each other are preferably adjusted by means of shaping and/or ablating based on the scanning data.

8. Method according to any one of the preceding claims, **characterised in that**
at least one cylindrical or conical recess (7) is generated or exists in said model (6, 16, 26, 36), wherein the recess (7) is generated or exists to have one-fold or n-fold rotational symmetry about the longitudinal axis of the recess (7), and one of the said sleeve (11) with the same rotational symmetry, at least over regions thereof, is to be inserted into the recess (7) such that it fits in the recess (7) only in one orientation or in the n-fold orientation.

9. Method according to any one of the claims 5 to 8, **characterised in that**
the at least one recess (7) is predefined during the production of the model (6, 16, 26, 36) to have a fixed defined shape that matches a certain shape of a sleeve (11), and/or a shape of the recess (7) is selected from a multiplicity of different shapes that match a multiplicity of the said sleeves (11), wherein the shape is integrated into a measured virtual digitised jaw model (6, 16, 26, 36) as recess (7) preferably before the model (6, 16, 26, 36) is produced.

## Revendications

1. Procédé pour produisant un analogue de laboratoire (1, 21, 31) pour des implants dentaire comprenant les étapes de :
fournissant au moins une douille (11) comprenant une cavité cylindrique (4) ayant un filetage intérieur;
fournissant un modèle tridimensionnel (6, 16, 26, 36) d'au moins une région partielle d'une mâchoire d'un patient qui tient au moins un implant dentair;
insérant au moins une de ladite douille (11) dans au moins une encoche (7) du modèle (6, 16, 26, 36) convenant à la douille (11), selon lequel chacune encoche (7) est arrangée dans une région du modèle (6, 16, 26, 36) dans laquelle un implant dentair est arrangé dans la mâchoire du patient; et
l'ablation entièrement automatique d'au moins une douille insérée (11), selon lequel l'ablation est contrôlée par des données d'un scan tridimensionnel de la cavité orale du patient, selon lequel les données a été enregistrées préalablement, et la douille (11) est ablatée basé sur les données de sorte que l'extrémité crestale de l'analogue de laboratoire (1, 21, 31) produit à partir de la douille (11) coïncide avec l'extrémité crestale de l'implant dentaire dans la mâchoire du patient.

2. Procédé selon la revendication 1, **caractérisé en ce que**
la douille (11) est ablatée, en particulière coupée, moulue et/ou fraisée, procédant à partir de la direction crestale.

3. Procédé selon l'une des revendications précédentes, **caractérisé en ce que**
l'ablation entièrement automatique, qui en particulière est effectuée de façon assisté par ordinateur, est effectuée avec une précision d'au moins ± 10 [micro]m, de préférence avec une précision d'au moins ± 5 [micro]m.

4. Procédé selon l'une des revendications précédentes, **caractérisé en ce que**
les données du scan tridimensionnel de la cavité orale du patient sont utilisées pour la production, en particulière la production entièrement automatique, du modèle tridimensionnel (6, 16, 26, 36) du mâchoire ou de la région du mâchoire, selon lequel le modèle (6, 16, 26, 36) de préférence est produit au moyen du prototypage rapide, de préférence particulière avec une précision d'au moins ± 100 [micro]m, de préférence plus particulière avec une précision d'au moins ± 60 [micro]m.

5. Procédé selon l'une des revendications précédentes, **caractérisé en ce qu'**
une méthode stéréolithographique basé sur CAO est utiliser à obtenir les données pour la production du modèle (6, 16, 26, 36), et **en ce que** le modèle (6, 16, 26, 36) de préférence est fabriqué en une matière plastique, de préférence particulière en une matière plastique durcissant à la lumière.

6. Procédé selon l'une des revendications précédentes, **caractérisé en ce qu'**
un usinage à cinq axes, en particulière une fraise CNC à cinq axes, est utilisé à l'ablation, en particulière pour fraisant et/ou moulant.

7. Procédé selon l'une des revendications précédentes, **caractérisé en ce qu'**
au moins deux encoches (7) sont générées ou existent dans le modèle tridimensionnel (6, 16, 26, 36), et de préférence une de ladite douille (11) est insérée respectivement dans chacune des encoches (7), selon lequel de préférence la position de l'encoche (7) et/ou des l'extrémités crestales des analogues de laboratoire (1, 21, 31) l'un à l'autre sont ajustée au moyen de formant et/ou ablatant basé sur les données du scan.

8. Procédé selon l'une des revendications précédentes, **caractérisé en ce qu'**
au moins une encoche cylindrique ou conique (7) est générée ou existe dans ledit modèle (6, 16, 26, 36), selon lequel l'encoche est générée ou existe avec une symétrie rotationnelle unique ou multiple au sujet de l'axe longitudinal de l'encoche (7), et une de ladite douille (11) avec la même symétrie rotationnelle, au moins dans des régions desquelles, est insérée dans l'encoche (7) de sorte qu'il convient dans l'encoche (7) seulement en une orientation ou en l'orientation multiple.

9. Procédé selon l'une des revendications 5 à 8, **caractérisé en ce qu'**
une forme fermement définie pour l'au moins une encoche (7) est prédéfinie pendant la production du modèle (6, 16, 26, 36) qui convient une certaine forme d'une douille (11), et/ou une forme pour l'encoche (7) est sélectionnée à partir d'un multiplicité des formes différentes qui convient un multiplicité des lesdites douilles (11), selon lequel la forme est intégrée dans un modèle mesuré virtuel numérisé (6, 16, 26, 36) de la mâchoire en tant qu'une encoche (7), de préférence après le modèle (6, 16, 26, 36) est produit.
